# EUROPEAN PATENT APPLICATION

(11) **EP 4 270 125 A1**
(43) Date of publication of application: **01.11.2023**
(21) Application number: 20966999.3
(22) Date of filing: 25.12.2020
(51) Int. Cl.: G05B 19/418

(54) **INFORMATION PROCESSING DEVICE, DESIGNATION METHOD, AND DESIGNATION PROGRAM**

(71) Applicant: FUJITSU LIMITED, Kawasaki-shi, Kanagawa 211-8588 (JP)
(72) Inventor: ITANI, Norihiko, Kawasaki-shi, Kanagawa 211-8588 (JP); NAGATO, Tsuyoshi, Kawasaki-shi, Kanagawa 211-8588 (JP)
(74) Representative: Hoffmann Eitle
(86) International application number: PCT/JP2020/048768
(87) International publication number: WO 2022/137513

(57) **Abstract**

A computer is caused to execute processing including: obtaining a result of a simulation based on a result of distributing each of a plurality of objects into any of work devices based on first information indicating a processing order for processing the plurality of objects and second information indicating a type being processable by each work device; counting a number N1 of objects having moved to another work device although processing is capable of being executed on an object to be distributed next and counting a number N2 of objects being caused to wait since processing is executed on another object although processing is capable of being executed on an object to be distributed next, under conditions such that each object waits when a work device executes processing on another object; and specifying a work device to be increased or decreased according to any of the N1 or the N2.

## Description

### FIELD

This case relates to an information processing device, a specifying method, and a specifying program.

### BACKGROUND

Techniques for automatically providing information regarding a work plan regarding a work line such as a manufacturing line are disclosed (for example, refer to Patent Documents 1 to 3).

### SUMMARY

### TECHNICAL PROBLEM

For example, by switching a processing order of objects in a work line and performing a simulation, it is considered to search for the processing order so that a key performance indicator (KPI) such as a work completion time or a work cost satisfies a desired condition. However, as a result of searching for the processing order, there are some cases where the KPI does not satisfy the desired condition. In this case, it is required to improve the KPI by increasing or decreasing the number of work devices.

In one aspect, an object of the present disclosure is to provide an information processing device, a specifying method, and a specifying program that can provide information regarding increase or decrease of the number of work devices.

### SOLUTION TO PROBLEM

In one aspect, a specifying program causes a computer to execute processing of obtaining first information that indicates a processing order of processing a plurality of objects including a plurality of types, processing of obtaining second information that indicates a type that is processable by each of a plurality of work devices, among the plurality of types, processing of distributing each of the plurality of objects into any one of a plurality of work devices based on the first information and the second information, processing of obtaining a result of a simulation regarding processing of the plurality of work devices, based on a result of distributing each of the plurality of objects, processing of counting the number N1 of objects that have moved to another work device although processing can be executed on an object to be distributed next, for each of the plurality of work devices from the result of the simulation and counting the number N2 of objects that are caused to wait since processing is executed on another object although processing can be executed on the object to be distributed next, under conditions such that each of the plurality of objects waits if the work device that is capable of executing the processing on the object is executing processing on another object, and processing of specifying a work device to be increased or decreased with respect to the plurality of work devices, according to at least one of the number N1 of objects and the number N2 of objects.

### ADVANTAGEOUS EFFECTS OF INVENTION

Information regarding increase or decrease of the number of work devices can be provided.

### BRIEF DESCRIPTION OF DRAWINGS

FIGs. 1A to 1C are diagrams for explaining an outline of a manufacturing line;
FIGs. 2A to 2C are diagrams for explaining the outline of the manufacturing line;
FIG. 3 is a diagram illustrating a manufacturing line model;
FIG. 4A is a functional block diagram illustrating an overall configuration of an information processing device, and FIG. 4B is a block diagram illustrating a hardware configuration of each unit of the information processing device;
FIG. 5 is a diagram illustrating a relationship between a product on which a manufacturing process can be performed by each manufacturing device and a process time of the manufacturing process for each product;
FIG. 6 is a flowchart illustrating optimization processing;
FIGs. 7A to 7D are diagrams for illustrating counts of the number N1 of products and the number N2 of products;
FIGs. 8A and 8B are diagrams illustrating a result of step S3; and
FIGs. 9A to 9E are diagrams illustrating another aspect of step S9.

### DESCRIPTION OF EMBODIMENTS

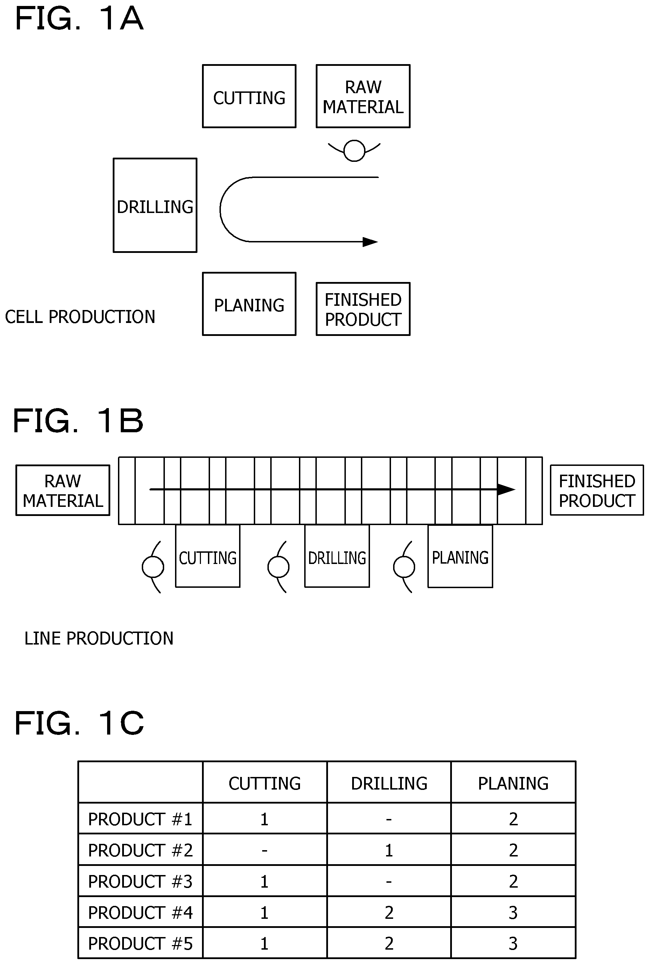

First, an outline of a manufacturing line will be described as an example of a work line. FIGs. 1A to 1C are diagrams for explaining the outline of the manufacturing line. FIG. 1A is a diagram illustrating a cell-production type manufacturing line. FIG. 1B is a diagram illustrating a line-production type manufacturing line. As illustrated in FIG. 1A or 1B, a product (raw material) before being completed is input into a slot. Each product undergoes each manufacturing process in the middle of the manufacturing line and becomes a finished product. In FIG. 1A or 1B, as an example, a cutting process, a drilling process, and a planing process are performed.

In recent years, a wide variety of products in small quantities are manufactured. Therefore, a manufacturing process to be performed is different for each product number (type of product). For example, as illustrated in FIG. 1C, for a product #1, the cutting process is performed first, the planing process is performed second, and then, the product #1 is completed. For a product #2, the drilling process is performed first, and the planing process is performed second. Furthermore, in the drilling process, content of drilling may differ according to the type of the product. In this way, to manufacture a wide variety of products in small quantities, the manufacturing process becomes complicated. Therefore, it is considered to improve efficiency of the manufacturing line by arranging a plurality of manufacturing devices that can perform each manufacturing process.

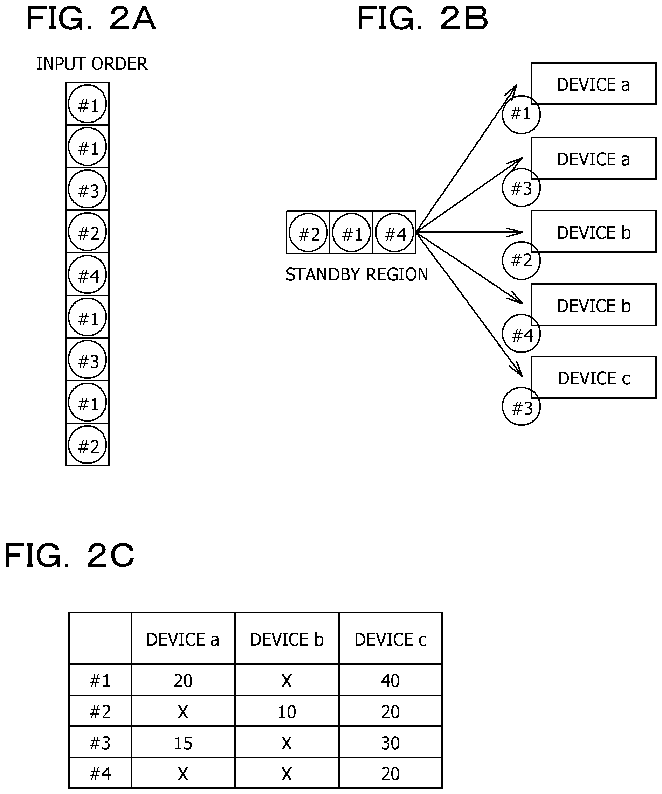

For example, as illustrated in FIG. 2A, an input order of each product is determined. In the example in FIG. 2A, the input order is determined from top to bottom. As illustrated in FIG. 2B, each product transferred to a head of a standby region is distributed to each manufacturing device. A distribution destination of each product is a manufacturing device that can perform a manufacturing process necessary for a leading product. As illustrated in FIG. 2C, the product on which the necessary manufacturing process can be performed by each manufacturing device and a process time necessary for the manufacturing process of the product are determined. A product that can be manufactured is different for each manufacturing device.

For example, although a manufacturing device a can perform manufacturing processes of products #1 and #3, the manufacturing device a cannot manufacture products #2 and #4. Although a manufacturing device b can perform a manufacturing process of the product #2, the manufacturing device b cannot manufacture the products #1, #3, and #4. A manufacturing device c can perform manufacturing processes of all the products #1 to #4.

If all the manufacturing devices, which can perform a necessary manufacturing process on the product that is transferred to the head of the standby region, are performing a manufacturing process of another product, the product waits at the head of the standby region. In a case where the another product moves from the manufacturing device, the product that is waiting at the head moves to the manufacturing device. Note that, in a case where there is a plurality of manufacturing devices to which products can be distributed from the standby region, a distribution destination is selected according to a predetermined rule. For example, a manufacturing device of which a process time is short, a manufacturing device of which a manufacturing cost is low, or the like is selected. Note that, since the products are sequentially distributed to each manufacturing device from the leading product in the standby region, if the leading product waits, the other products also wait.

Note that, if a general-purpose device that can perform manufacturing processes of a large number of types of products is used, an operation efficiency of each manufacturing device is improved, and a waiting time for each product is shortened. However, the general-purpose device tends to be expensive and take a longer manufacturing process time. The manufacturing process is lengthened, for example, because a setting change work (changeover work) or the like according to the type of the product is caused. On the other hand, a dedicated device that can perform manufacturing processes of a small number of types of products tends to be inexpensive and take a shorter manufacturing process time. However, the dedicated device cannot perform a manufacturing process for another type of product. In this way, since each of the general-purpose device and the dedicated device has advantages and disadvantages, the general-purpose devices and the dedicated devices are mixed in the manufacturing line.

If a standby time for each product increases, a time required to complete manufacturing of all the products (manufacturing lead time) increases. Alternatively, a manufacturing cost varies according to an installation cost of each manufacturing device, an operation time of each manufacturing device, or the like. Therefore, it is required for a plurality of KPIs to satisfy a predetermined condition. As the plurality of KPIs, the number of changeovers of each manufacturing device, a delivery date delay time of each product, the number of times of delays of each product, and the like are exemplified, in addition to the manufacturing lead time and the manufacturing cost.

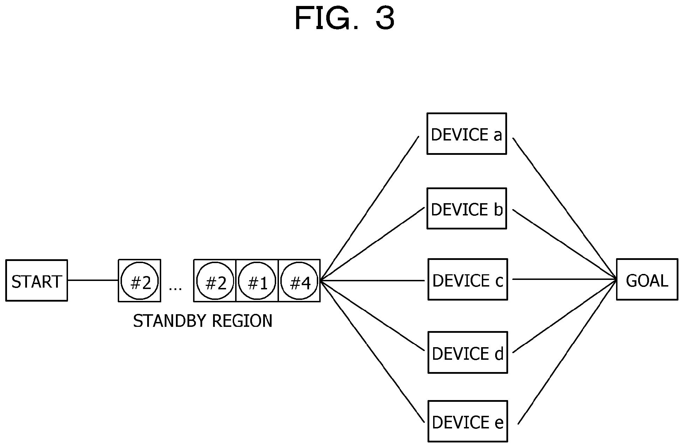

Therefore, by performing a simulation while switching the input order of the product to a manufacturing line model by using a line simulator or the like, it is considered to optimize the input order so that the KPI satisfies the predetermined condition. The line simulator performs simple model calculation for dividing the manufacturing line model into fine cells and transferring a product to the cell in a case where one cell ahead becomes vacant. FIG. 3 is a diagram illustrating the manufacturing line model. After staying only for a designated process time in a cell corresponding to each manufacturing device, a product input into the manufacturing line model moves to the next cell. In the standby region, for example, a predetermined number of cells are set. As a result, in the standby region, the predetermined number of products can wait. However, in the standby region, the product waits as a leading product, in order from the product that has arrived at the standby region. After the input of each product into a start cell is started at predetermined time intervals according to an input order, the line simulator performs a simulation before all products reach a goal.

By using the line simulator, the input order can be optimized so that an objective function that is determined according to the input order satisfies a predetermined condition, using the KPI such as the manufacturing lead time or the manufacturing cost as the objective function. The number of objective functions may be one or equal to or more than two. In a case where the number of objective functions is one, single-objective optimization is performed. In a case where the number of objective functions is equal to or more than two, multi-objective optimization is performed. From among the obtained results, an input plan that satisfies a desired condition is adopted. However, in a case where no result satisfies the desired condition of the KPI, for example, it is required to adjust the type and the number of manufacturing devices. At this time, it is required to increase or decrease the number of manufacturing devices.

Hereinafter, an information processing device, a specifying method, and a specifying program that can provide information used to increase or decrease the number of manufacturing devices in order to obtain a desired KPI will be described.

### [First Embodiment]

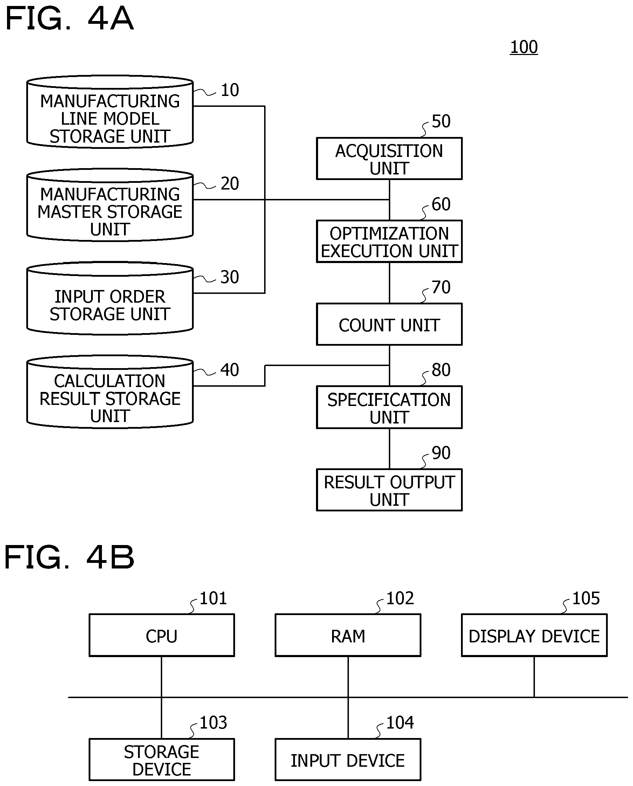

FIG. 4A is a functional block diagram illustrating an overall configuration of an information processing device 100 according to a first embodiment. The information processing device 100 is a server for optimization processing or the like. As illustrated in FIG. 4A, the information processing device 100 includes a manufacturing line model storage unit 10, a manufacturing master storage unit 20, an input order storage unit 30, a calculation result storage unit 40, an acquisition unit 50, an optimization execution unit 60, a count unit 70, a specification unit 80, a result output unit 90, or the like.

FIG. 4B is a block diagram illustrating a hardware configuration of each unit of the information processing device 100. As illustrated in FIG. 4B, the information processing device 100 includes a CPU 101, a RAM 102, a storage device 103, an input device 104, a display device 105, or the like.

The central processing unit (CPU) 101 is a central processing unit. The CPU 101 includes one or more cores. The random access memory (RAM) 102 is a volatile memory that temporarily stores a program to be executed by the CPU 101, data to be processed by the CPU 101, or the like. The storage device 103 is a nonvolatile storage device. As the storage device 103, for example, a read only memory (ROM), a solid state drive (SSD) such as a flash memory, a hard disk to be driven by a hard disk drive, or the like may be used. The storage device 103 stores the specifying program according to the present embodiment. The input device 104 is an input device such as a mouse or a keyboard. The display device 105 is a display device such as a liquid crystal display. The display device 105 displays a result output by the result output unit 90. Each unit in FIG. 4A is implemented by executing the specifying program by the CPU 101. Note that, as each unit in FIG. 4A, hardware such as a dedicated circuit may be used.

The manufacturing line model storage unit 10 stores the manufacturing line model as illustrated in FIG. 3.

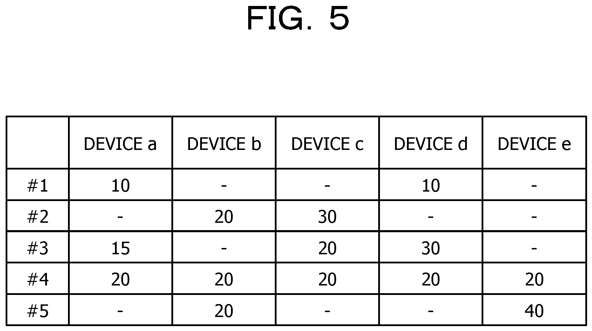

The manufacturing master storage unit 20 stores a manufacturing master in which a type of each product is associated with a manufacturing device that can perform a manufacturing process for each type of the product. FIG. 5 is a diagram illustrating the manufacturing master. In the example in FIG. 5, for example, although a manufacturing device a can perform a necessary manufacturing process on products #1, #3, and #4, the manufacturing device a cannot perform a necessary manufacturing process necessary on products #2 and #5.

The input order storage unit 30 stores an initial input order as illustrated in FIG. 2A. The initial input order is, for example, an order obtained by arranging purchase orders as received from customers and may be input in advance by a user using the input device 104. Alternatively, the initial input order may be generated with random numbers. Since the initial input order is generated without considering objective functions, the initial input order often does not provide an excellent value for any objective function.

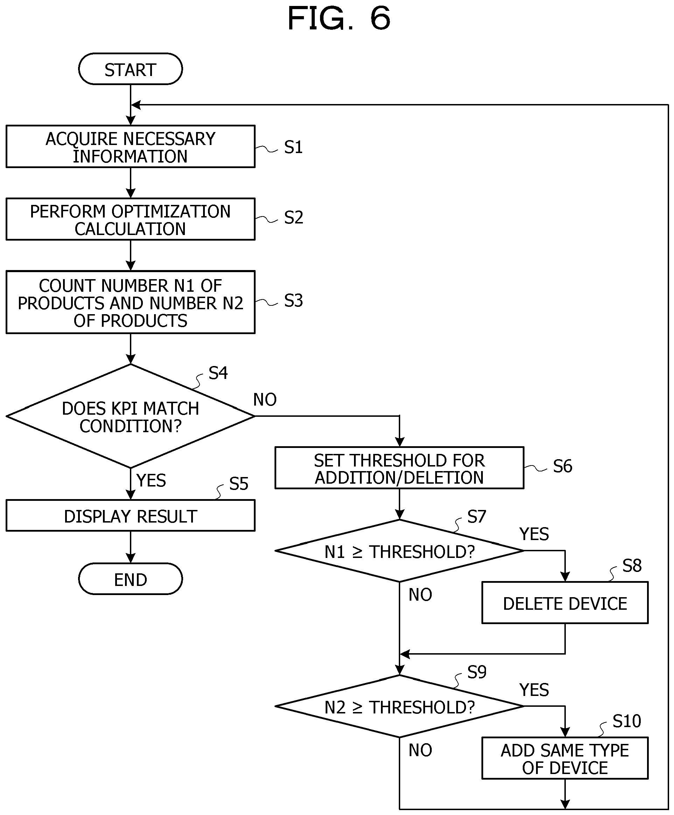

Hereinafter, optimization processing will be described with reference to the flowchart in FIG. 6. First, the acquisition unit 50 acquires information necessary for optimization calculation (step S1). The information necessary for the optimization calculation includes the manufacturing line model stored in the manufacturing line model storage unit 10. Furthermore, the information necessary for the optimization calculation includes the manufacturing master illustrated in FIG. 5. Moreover, the information necessary for the optimization calculation includes the initial input order stored in the input order storage unit 30.

Next, the optimization execution unit 60 performs the optimization calculation using the information acquired by the acquisition unit 50 in step S1 (step S2). The optimization calculation here performs a line simulation according to the input order and acquires the manufacturing lead time and the manufacturing cost as objective functions, regarding the simulation result before all the products reach the goal from the start of the product input into the start. With an evolutionary algorithm (for example, genetic algorithm (GA)), the input order is optimized so that the designated objective function becomes excellent.

Next, for each manufacturing device, in a case where a product arrives at the head of the standby region, the count unit 70 counts the number N1 of products that have moved to another manufacturing device although a manufacturing process can be performed and is not performed on the product. Furthermore, for each manufacturing device, in a case where the product arrives at the head of the standby region, the count unit 70 counts the number N2 of products that is caused to wait since the manufacturing process is performed on another product although the manufacturing process can be performed on the product (step S3). Note that, here, waiting means to stop at the head of the standby region for a specified time (0 ≥ 0) or more.

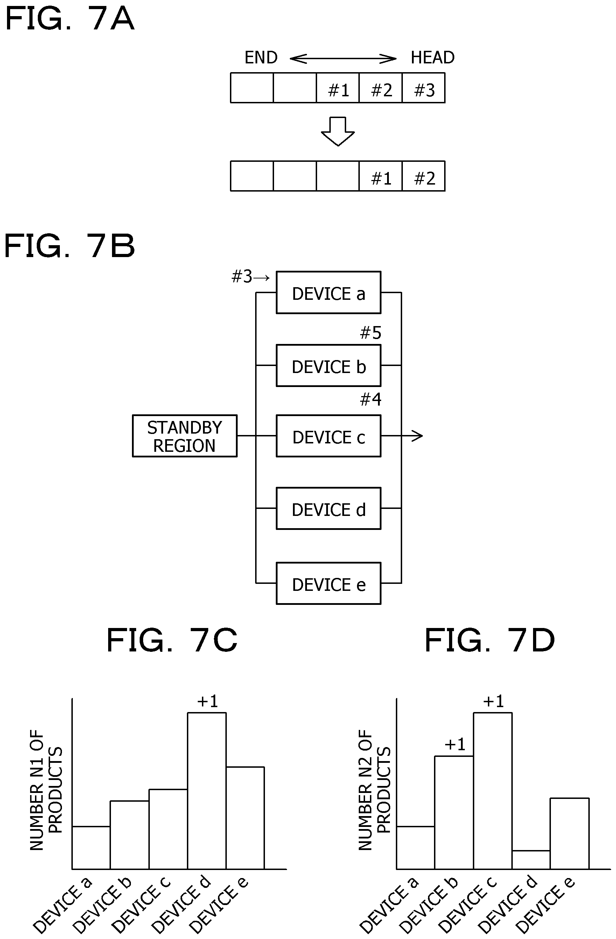

For example, as illustrated in FIG. 7A, it is assumed that the products #3, #2, and #1 wait in this order from the head to the end, in the standby region. In this state, as illustrated in FIG. 7B, it is assumed that the manufacturing device b be performing the manufacturing process of the product #5 and the manufacturing device c be performing the manufacturing process of the product #4. In this case, according to the manufacturing master in FIG. 5, the product #3 can be distributed to the manufacturing device a or a manufacturing device d. However, since a process time of the manufacturing device d is longer than a process time of the manufacturing device a, as illustrated in FIG. 7B, it is assumed the product #3 have moved to the manufacturing device a.

In this case, in a case where a product arrives at the head of the standby region, the manufacturing device d is in a state where the product has moved to another manufacturing device although the manufacturing process is not performed and can be performed on the product. Therefore, as illustrated in FIG. 7C, the number N1 of products of the manufacturing device d is accumulated by one.

The product #3 has moved to the manufacturing device a so that the product #2 moves to the head of the standby region, as illustrated in FIG. 7A. In this state, since the manufacturing devices b and c are performing the manufacturing process on another product, the product #2 waits in the standby region, according to the manufacturing master in FIG. 5.

In this case, in a case where a product arrives at the head of the standby region, the manufacturing devices b and c cause the product to wait since the manufacturing processes are performed on the other products although the manufacturing process can be performed on the product. Therefore, as illustrated in FIG. 7D, the numbers N2 of products of the manufacturing devices b and c are accumulated by one.

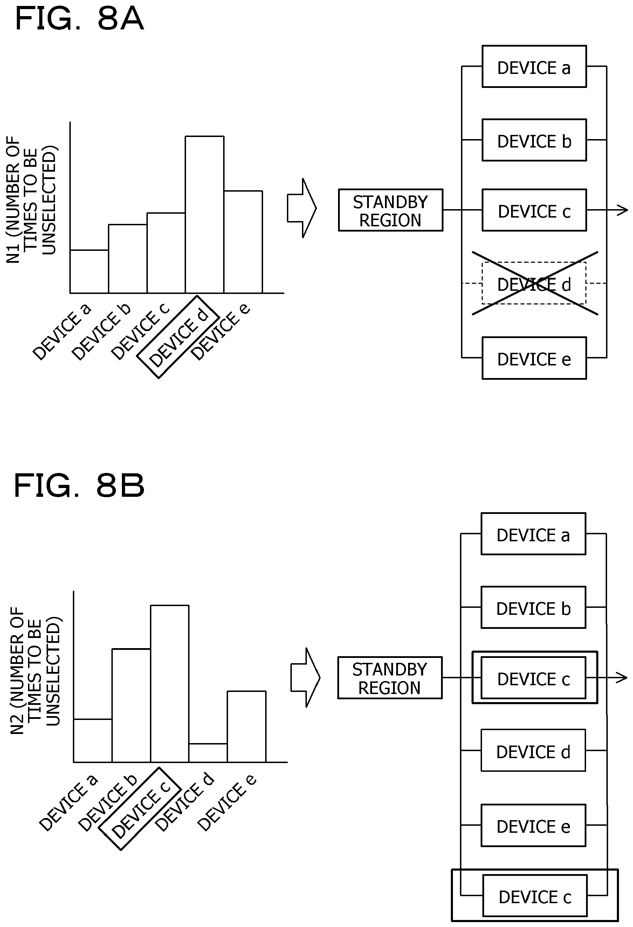

FIGs. 8A and 8B are diagrams illustrating the result in step S3. In FIG. 8A, for each manufacturing device, the number N1 of products is counted. In FIG. 8B, for each manufacturing device, the number N2 of products is counted. Note that the number N1 of products and the number N2 of products are accumulated values for all the input orders that have simulated in the optimization process in step S2. For example, in a case where the input order is changed 99 times from the initial input order, the count values of the number N1 of products and the number N2 of products are accumulated values of the number N1 of products and the number N2 of products for the simulation results of 100 times. The count values of the number N1 of products and the number N2 of products are stored in the calculation result storage unit 40.

Next, the specification unit 80 determines whether or not a KPI satisfies a predetermined condition for a result of the line simulation in an optimum input order obtained by performing step S2 (step S4). In a case where it is determined as "Yes" in step S4, since the desired KPI is obtained, it is not necessary to add or delete a manufacturing device. Therefore, in a case where it is determined as "Yes" in step S4, the result output unit 90 displays the result in step S2, the result in step S3, or the like on the display device 105 (step S5). Thereafter, the execution of the flowchart ends.

In a case where it is determined as "No" in step S4, the specification unit 80 sets a threshold for each of the number N1 of products and the number N2 of products (step S6). Next, the specification unit 80 determines whether or not the number N1 of products is equal to or more than the threshold set in step S6, for each manufacturing device (step S7). In a case where there is a manufacturing device that is determined as "Yes" in step S7, the specification unit 80 deletes the manufacturing device from the manufacturing line model, as illustrated in FIG. 8A (step S8). The manufacturing line model storage unit 10 stores the updated manufacturing line model. In step S8, the result output unit 90 may cause a user to delete the manufacturing device from the manufacturing line model, by displaying the manufacturing device to be deleted on the display device 105.

Next, the specification unit 80 determines whether or not the number N2 of products is equal to or more than the threshold set in step S6, for each manufacturing device (step S9). In a case where there is a manufacturing device that is determined as "Yes" in step S9, the specification unit 80 adds one more manufacturing device to the manufacturing line model, as illustrated in FIG. 8B (step S10). The manufacturing line model storage unit 10 stores the updated manufacturing line model. Thereafter, the processing is performed again from step S1. In step S10, the result output unit 90 may cause the user to add the manufacturing device to the manufacturing line model by displaying the manufacturing device to be added on the display device 105.

Note that, in a case where it is determined as "No" in step S7, step S9 is performed without performing step S8. In a case where it is determined as "No" in step S9, the processing is performed again from step S1 without performing step S10.

According to the present embodiment, by counting the number N1 of products and the number N2 of products, a manufacturing device to be increased or decreased can be specified. For example, since the number of times when the product cannot be distributed can be counted by counting the number N1 of products, the number N1 of products can be assumed as an index for necessity of each manufacturing device. Furthermore, since the number of times when the product is caused to wait can be counted by counting the number N2 of products, the number N2 of products can be assumed as an index for necessity of each manufacturing device. By comparing the number N1 of products with the threshold, a manufacturing device to be deleted can be specified. Furthermore, by comparing the number N2 of products with the threshold, a manufacturing device to be added can be specified.

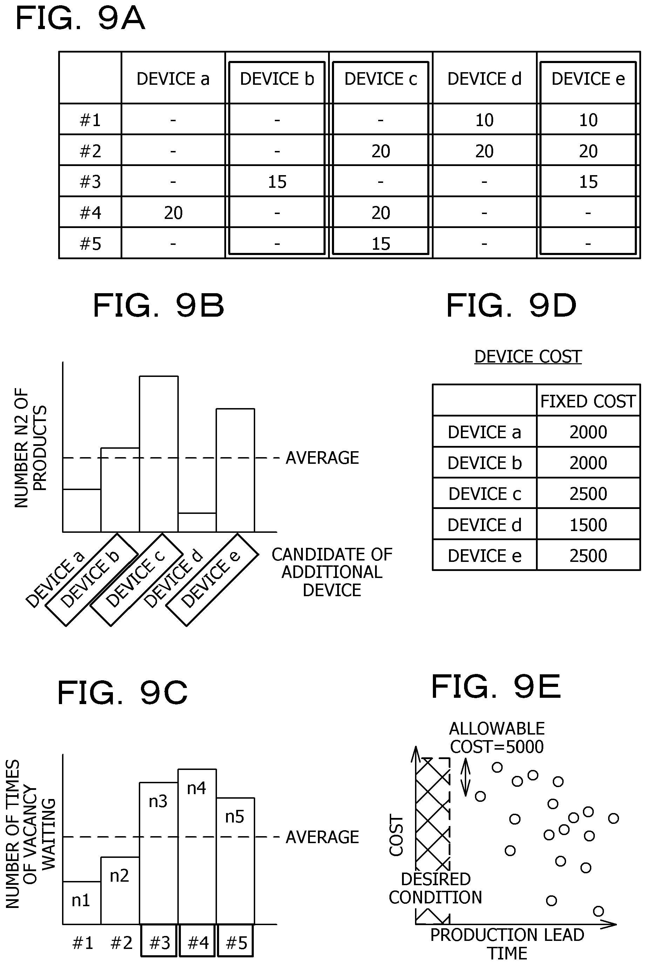

With reference to FIGs. 9A to 9E, another aspect of step S9 in FIG. 6 will be described. It is assumed that a manufacturing master as illustrated in FIG. 9A be stored in the manufacturing master storage unit 20. In the example in FIG. 9A, the manufacturing device a is a dedicated device that can perform a necessary manufacturing process only on the product #4. Furthermore, the manufacturing device b is a dedicated device that can perform a necessary manufacturing process only on the product #3. On the other hand, the manufacturing device c is a general-purpose device that can perform a necessary manufacturing process on the products #2, #4, and #5. Similarly to the manufacturing device c, the manufacturing devices d and e are general-purpose devices.

It is assumed that the number N2 of products be obtained as illustrated in FIG. 9B, as the result of step S3. Furthermore, it is assumed that the number of times of vacancy waiting at the head of the standby region be obtained as illustrated in FIG. 9C, for each type of each product, as the result of step S3. The results of FIGs. 9B and 9C are accumulated values for all the input orders simulated in the optimization process in step S2.

As a type of the manufacturing device to be added, a manufacturing device of which the number N2 of products is larger than a threshold (for example, average value) is set as a candidate. In the example in FIG. 9B, the manufacturing devices b, c, and e are candidates. From among these, a manufacturing device that can perform the manufacturing process on all the products of which the number of times of vacancy waiting in FIG. 9C is larger than the threshold (for example, average value) is selected. The selected manufacturing device is deleted in step S8.

However, it is preferable to consider a cost to be increased by adding the manufacturing device. FIG. 9D is a diagram illustrating a fixed cost to be needed in a case where the manufacturing device is added. It is preferable to determine the number of manufacturing devices to be added, in a range where a desired condition of cost is satisfied. In order to set the cost within a range of an allowable cost (for example, 5000) as illustrated in FIG. 9E, in a case where it is not possible to select a manufacturing device that can perform the manufacturing process on all the products (#3, #4, and #5) of which the number of times of vacancy waiting is larger than the average, a manufacturing device that can perform the manufacturing process on the products (#4, #3, and #5 in descending order) of which the number of times of vacancy waiting is large, is preferentially selected. In a case of expression as a mathematical expression, first, a plurality of candidates of the number of each manufacturing device to be added is exemplified in a range within the allowable cost. For example, (manufacturing device b, manufacturing device c, manufacturing device d) = (1, 1, 0), (0, 1, 1), ... is exemplified. For each of this candidate, the number of manufacturing devices to be added that can perform the manufacturing process for each product (#1, #2, #3, #4, #5) = (0, 1, 1, 1, 1), (1, 2, 1, 1, 1) ... = (x1, x2, x3, x4, x5) is obtained. The type and the number of manufacturing devices, with which a formula obtained by multiplying this number of devices to be added by the number of times of vacant waiting for each product as a coefficient (n1 × x1 + n2 × x2 + n3 × x3 + n4 × x4 + n5 × x5) becomes the largest, are selected as additional manufacturing devices to shorten the manufacturing lead time. In this way, by multiplying the number of times of vacancy waiting for each product as the coefficient, it is possible to preferentially add the manufacturing device that can be manufactured, for the product of which the number of times of vacancy waiting is large.

In the example described above, the products #1 to #5 are examples of a plurality of objects including a plurality of types. The input order of the products into the manufacturing line is an example of a processing order for processing the plurality of objects including the plurality of types. The manufacturing device is an example of a work device.

The acquisition unit 50 is an example of an acquisition unit that acquires first information that indicates the processing order for processing the plurality of objects including the plurality of types and acquires second information that indicates a type that can be processed by each of the plurality of work devices, among the plurality of types. The count unit 70 is an example of a count unit that obtains a result of a simulation regarding processing of the plurality of work devices, based on a result of distributing each of the plurality of objects to any one of the plurality of work devices, based on the first information and the second information, counts the number N1 of objects that have moved to another work device although processing can be executed on an object to be distributed next, for each of the plurality of work devices, from the result of the simulation, and counts the number N2 of objects that are caused to wait since processing is executed on another object although the processing can be executed on the object to be distributed next, under conditions such that each of the plurality of objects waits if the work device that can execute the processing on the object is executing the processing on another object. The specification unit 80 is an example of a specification unit that specifies the work device to be increased or decreased with respect to the plurality of work devices, according to at least one of the number N1 of objects and the number N2 of objects.

While the embodiment of the present invention has been described above in detail, the present invention is not limited to such a specific embodiment, and various modifications and alterations may be made within the scope of the present invention described in the claims.

### CITATION LIST

### PATENT DOCUMENT

Patent Document 1: Japanese Laid-open Patent Publication No. 2020-047301
Patent Document 2: Japanese Laid-open Patent Publication No. 2005-301653
Patent Document 3: Japanese Laid-open Patent Publication No. 2015-087803

### REFERENCE SIGNS LIST

- 10: manufacturing line model storage unit
- 20: manufacturing master storage unit
- 30: input order storage unit
- 40: calculation result storage unit
- 50: acquisition unit
- 60: optimization execution unit
- 70: count unit
- 80: specification unit
- 90: result output unit
- 100: information processing device
- 101: CPU
- 102: RAM
- 103: storage device
- 104: input device
- 105: display device

## Claims

1. A specifying program for causing a computer to perform processing, the processing comprising:
obtaining first information that indicates a processing order of processing a plurality of objects, the plurality of objects including a plurality of types;
obtaining second information that indicates a type that is processable by each of a plurality of work devices, among the plurality of types;
distributing, based on the first information and the second information, each of the plurality of objects to any of the plurality of work devices;
obtaining a result of a simulation regarding processing of the plurality of work devices based on a result of the distributing each of the plurality of objects to any of the plurality of work devices;
counting a number N1 that corresponds to a number of objects which have moved to another work device although processing is capable of being executed on an object to be distributed next, for each of the plurality of work devices from the result of the simulation, and counting a number N2 that corresponds to a number of objects which are caused to wait since processing is executed on another object although processing is capable of being executed on the object to be distributed next, under conditions such that each of the plurality of objects waits when the work device that is capable of executing the processing on the object is executing processing on another object; and
specifying a work device to be increased or decreased with respect to the plurality of work devices, according to at least any of the number N1 or the number N2.

2. The specifying program according to claim 1, wherein the specifying of the work device includes specifying a work device to be deleted from the plurality of work devices, according to the number N1.

3. The specifying program according to claim 1 or 2, wherein the specifying of the work device includes specifying a work device to be added to the plurality of work devices, according to the number N2.

4. The specifying program according to claim 3, wherein the specifying of the work device includes considering the number of waiting times of each of the plurality of types, in addition to the number N2, in a case of specifying the work device to be added to the plurality of work devices.

5. The specifying program according to claim 3 or 4, wherein the specifying of the work device includes considering an additional cost of the work device to be added, in addition to the number N2, in a case of specifying the work device to be added to the plurality of work devices.

6. The specifying program according to any one of claims 1 to 5, wherein the processing order of the plurality of types is a sequentially searched order so that an objective function determined according to the processing order becomes excellent.

7. The specifying program according to any one of claims 1 to 6, wherein the specifying of the work device includes specifying uses an evolutionary algorithm that optimizes the objective function when the processing order of the plurality of types is searched.

8. The specifying program according to any one of claims 1 to 7, wherein in a case where there is a plurality of work devices that is capable of processing an object to be distributed next and the plurality of work devices is not working on another object, a distribution destination is selected according to a predetermined rule.

9. A specifying method comprising:
obtaining first information that indicates a processing order of processing a plurality of objects, the plurality of objects including a plurality of types;
obtaining second information that indicates a type that is processable by each of a plurality of work devices, among the plurality of types;
distributing, based on the first information and the second information, each of the plurality of objects to any of the plurality of work devices;
obtaining a result of a simulation regarding processing of the plurality of work devices based on a result of the distributing each of the plurality of objects to any of the plurality of work devices;
counting a number N1 that corresponds to a number of objects which have moved to another work device although processing is capable of being executed on an object to be distributed next, for each of the plurality of work devices from the result of the simulation, and counting a number N2 that corresponds to a number of objects which are caused to wait since processing is executed on another object although processing is capable of being executed on the object to be distributed next, under conditions such that each of the plurality of objects waits when the work device that is capable of executing the processing on the object is executing processing on another object; and
specifying a work device to be increased or decreased with respect to the plurality of work devices, according to at least any of the number N1 or the number N2.

10. The specifying method according to claim 9, wherein the specifying of the work device includes specifying a work device to be deleted from the plurality of work devices, according to the number N1.

11. The specifying method according to claim 9 or 10, wherein the specifying of the work device includes specifying a work device to be added to the plurality of work devices, according to the number N2.

12. The specifying method according to claim 11, wherein the specifying of the work device includes considering the number of waiting times of each of the plurality of types, in addition to the number N2, in a case of specifying the work device to be added to the plurality of work devices.

13. The specifying method according to claim 11 or 12, wherein the specifying of the work device includes considering an additional cost of the work device to be added, in addition to the number N2, in a case of specifying the work device to be added to the plurality of work devices.

14. The specifying method according to any one of claims 9 to 13, wherein the processing order of the plurality of types is a sequentially searched order so that an objective function determined according to the processing order becomes excellent.

15. The specifying method according to any one of claims 9 to 14, wherein the specifying of the work device uses an evolutionary algorithm that optimizes the objective function when the processing order of the plurality of types is searched.

16. The specifying method according to any one of claims 9 to 15, wherein in a case where there is a plurality of work devices that is capable of processing an object to be distributed next and the plurality of work devices is not working on another object, a distribution destination is selected according to a predetermined rule.

17. An information processing device comprising:
an acquisition unit configured to acquire first information that indicates a processing order of processing a plurality of objects that includes a plurality of types and acquire second information that indicates a type that is processable by each of a plurality of work devices, among the plurality of types;
a count unit configured to obtain a result of a simulation regarding processing of the plurality of work devices based on a result of distributing each of the plurality of objects to any one of the plurality of work devices, based on the first information and the second information, to count a number N1 that corresponds to a number of objects which have moved to another work device although processing is capable of being executed on an object to be distributed next, for each of the plurality of work devices from the result of the simulation, and to count a number N2 that corresponds to a number of objects which are caused to wait since processing is executed on another object although processing is capable of being executed on the object to be distributed next, under conditions such that each of the plurality of objects waits when the work device that is capable of executing the processing on the object is executing processing on another object; and
a specification unit configured to specify a work device to be increased or decreased with respect to the plurality of work devices, according to at least any of the number N1 or the number N2.

18. The information processing device according to claim 17, wherein the specification unit specifies a work device to be deleted from the plurality of work devices, according to the number N1.

19. The information processing device according to claim 17 or 18, wherein the specification unit specifies a work device to be added to the plurality of work devices, according to the number N2.

20. The information processing device according to claim 19, wherein the specification unit considers the number of waiting times of each of the plurality of types, in addition to the number N2, in a case of specifying the work device to be added to the plurality of work devices.

21. The information processing device according to claim 19 or 20, wherein the specification unit considers an additional cost of the work device to be added, in addition to the number N2, in a case of specifying the work device to be added to the plurality of work devices.

22. The information processing device according to any one of claims 17 to 21, wherein the processing order of the plurality of types is a sequentially searched order so that an objective function determined according to the processing order becomes excellent.

23. The information processing device according to any one of claims 17 to 22, wherein the specification unit uses an evolutionary algorithm that optimizes the objective function when the processing order of the plurality of types is searched.

24. The information processing device according to any one of claims 17 to 23, wherein in a case where there is a plurality of work devices that is capable of processing an object to be distributed next and the plurality of work devices is not working on another object, a distribution destination is selected according to a predetermined rule.
